# EUROPÄISCHE PATENTANMELDUNG

(11) **EP 2 157 469 A1**
(43) Veröffentlichungstag der Anmeldung: **24.02.2010**
(21) Anmeldenummer: 09164361.9
(22) Anmeldetag: 02.07.2009
(51) Int. Cl.: G02B 27/01

(54) **Laserprojektionssystem zur Modulierung und/oder Abbildung von Laserstrahlen**

(30) Priorität: 19.08.2008 DE 102008041336
(71) Anmelder: ROBERT BOSCH GMBH, 70442 Stuttgart (DE)
(72) Erfinder: Fiess, Reinhold, 77770, Durbach (DE); Hoffmann, Mikael, 67320, Bust (FR)

(57) **Zusammenfassung**

Es wird ein Laserprojektionssystem zur Modulierung und/oder Abbildung von Laserstrahlen, umfassend:
- wenigstens ein optisches Funktionselement (2),
- wenigstens ein für die Laserstrahlen (1, 7, 8, 9) zumindest teilweise transparentes Fenster (3), welches
sich im Strahlengang des Laserstrahls befindet, vorgeschlagen. Um die Bilddarstellung zu verbessern, ist ein Abschirmelement 4 zur Unterdrückung von Reflexionen am transparenten Fenster vorgesehen, welches in einem Strahlengang der Reflexion (6, 11) am transparenten Fenster liegt.

## Beschreibung

Die Erfindung betrifft ein Laserprojektionssystem zur Modulierung und/oder Abbildung von Laserstrahlen nach dem Oberbegriff des Anspruchs 1.

### Stand der Technik

Aus dem Stand der Technik ist, wie z.B. in der Druckschrift DE 101 35 986 A1 offenbart, bekannt, fahrzeugeigene Anzeigevorrichtungen mit einem Fenster auszustatten, um das Eindringen von Staub und Verunreinigungen zu verhindern.

### Aufgabe der Erfindung

Aufgabe der Erfindung ist es, ein Laserprojektionssystem vorzuschlagen, bei dem die Bilddarstellung verbessert werden kann.

Die Aufgabe wird, ausgehend von einem Laserprojektionssystem der eingangs genannten Art, durch die kennzeichnenden Merkmale des Anspruchs 1 gelöst.

Durch die abhängigen Ansprüche werden vorteilhafte Ausführungsbeispiele und Weiterbildungen der Erfindung ermöglicht.

Dementsprechend zeichnet sich ein erfindungsgemäßes Laserprojektionssystem zur Modulierung und/oder Abbildung von Laserstrahlen, welches wenigstens ein optisches Funktionselement sowie wenigstens ein für die Laserstrahlen zumindest teilweise transparentes Fenster, welches sich im Strahlengang des Laserstrahls befindet, umfasst, dadurch aus, dass ein Abschirmelement zur Unterdrückung von Reflexionen am transparenten Fenster vorgesehen ist, das in einem Strahlengang der Reflexion am transparenten Fenster liegt.

Derartige Laserprojektionssysteme umfassen in der Regel optische Funktionselemente, wie beispielsweise eine Abbildungsoptik, Umlenkspiegel, Blenden, Linsen, eine Mikrospiegelanzeige, LCD-Anzeigen oder Ähnliches. Des Weiteren ist meistens eine Lichtquelle, wie beispielsweise ein Laser vorhanden, deren Licht so moduliert wird, dass später dadurch ein entsprechendes Bild oder eine Information angezeigt bzw. abgebildet werden kann. Über eine Abbildungsoptik wird das Licht schließlich auf einer Projektionsfläche abgebildet, wobei grundsätzlich eine Vielzahl von Möglichkeiten in diesem Zusammenhang denkbar sind, wie eine derartige Abbildungsoptik ausgestaltet werden kann.

Beispielsweise kann die Abbildung direkt auf einer Fläche abgebildet werden, aber auch beispielsweise an einer Fläche reflektiert werden und somit für den Betrachter ein so genanntes virtuelles Bild erzeugen.

Bei diesen Vorrichtungen kann die Bildqualität bzw. die Bilddarstellung durch äußere Einflüsse verschlechtert werden, beispielsweise können Schmutz oder Staub in die Apparatur eindringen und sich beispielsweise auf optischen Funktionselementen anlagern. Grundsätzlich ist es möglich, derartige Projektionssysteme bzw. die entsprechenden optischen Funktionselemente mit Fenstern auszustatten, um diese somit vor dem Eindringen von Verunreinigungen zu schützen.

Derartige Fenster sind daher meist transparent für das entsprechende verwendete Licht (in der Regel im sichtbaren Bereich). Besonders vorteilhaft kann diese Maßnahme bei solchen optischen Funktionselementen sein, welche empfindlich gegenüber Berührungen von außen sind. Neben vorübergehenden oder reversiblen Beeinträchtigungen der Optik kann es unter Umständen sogar zu Schädigungen der optischen Elemente kommen.

Bei einem erfindungsgemäßen Laserprojektionssystem kann die Bilddarstellung dadurch verbessert werden, dass ein Abschirmelement zur Unterdrückung von Reflexionen am transparenten Fenster verwendet wird, das in einem Strahlengang der Reflexion am transparenten Fenster liegt. Da auch transparente Fenster, selbst solche, die eine entsprechende Beschichtung aufweisen, in der Regel einen von null verschiedenen Reflexionsgrad aufweisen, stellt sich die Schwierigkeit, dass solche Reflexionen letzten Endes in der Abbildung mit abgebildet werden und vom Benutzer als Störreflexe auch im Bild wahrgenommen werden. Sehr oft handelt es sich dabei um rein statische Reflexe, die durch Reflexion von Bauteilen entstehen. Auch bei Reflexionsgraden im sichtbaren Bereich (380 bis 780nm) von 0,5% und weniger kann es vorkommen, dass derartige Störreflexe deutlich in einem Bild noch wahrnehmbar sind. Diese Reflexionen können durch ein Abschirmelement vermindert bzw. ganz unterdrückt werden, sofern sich das Abschirmelement im Strahlengang der Reflexionen am transparenten Fenster liegt.

Ein weiterer Vorteil solcher Abschirmelemente kann darin bestehen, dass diese relativ kostengünstig gefertigt werden können.

Besonders elegant ist dabei die Lösung, dieses durch statische Reflexionen hervorgerufene Störlicht zunächst einmal aus dem Strahlengang der Abbildungsoptik zu entfernen. Bei einem vorteilhaften Ausführungsbeispiel der Erfindung ist daher das Abschirmelement hoch reflektierend ausgebildet. Somit kann die störende Reflexion praktisch vollständig abgelenkt werden.

Grundsätzlich besteht auch die Möglichkeit, bei einer Ausführung der Erfindung das Abschirmelement als Blende bzw. Absorptionselement auszubilden. Auch hierdurch kann prinzipiell ein störender Reflex unterdrückt werden.

Insbesondere bei einem hoch reflektierenden Abschirmelement kann es entsprechend vorteilhaft sein, das Laserprojektionssystem mit einem Absorptionselement zur Absorption der vom Abschirmelement reflektierten Strahlung auszurüsten. Somit kann der am Abschirmelement reflektierte Strahl auf das entsprechende Absorptionselement gerichtet werden und wird dort vollständig absorbiert. Je nachdem, welches Abschirmelement verwendet wird, kann es aber dennoch sein, dass ein gewisser Anteil an Licht reflektiert oder gestreut wird. Auch zur Unterdrückung derartiger Reflexe kann ein solches Absorptionselement dienen und in vorteilhafter Weise ein derartiges Laserprojektionssystem noch weiter verbessern.

Meistens wird es dabei von Vorteil sein, das Abschirmelement nur so groß zu gestalten, wie es unbedingt erforderlich ist, damit der Schattenwurf des Abschirmelementes nicht allzu groß wird. Im Allgemeinen kann daher die Dicke des Abschirmelementes vergleichsweise klein gewählt werden, solange kein Licht der störenden Reflexe das Abschirmelement durchdringen kann. Bei einer vorteilhaften Weiterbildung der Erfindung ist daher das Abschirmelement als ebene Scheibe ausgebildet.

Es bestehen im Prinzip verschiedene Anordnungsmöglichkeiten dieses Abschirmelementes. Beispielsweise ist es denkbar, das Abschirmelement senkrecht zum transparenten Fenster anzuordnen.

Zum Abbilden der modulierten und/oder abzubildenden Laserstrahlen werden meist Projektionsflächen vorgesehen. Grundsätzlich kann es sich dabei, wie bereits erwähnt, um Flächen handeln, welche zur direkten Abbildung des Lichtes genutzt werden oder aber um reflektierende Flächen, die für den Betrachter ein virtuelles Bild erzeugen.

Bei einer vorteilhaften Weiterbildung der Erfindung kann das Abschirmelement auch senkrecht zur Projektionsfläche angeordnet sein. Grundsätzlich kann dabei das Abschirmelement auch sowohl senkrecht zum transparenten Fenster als auch senkrecht zur Projektionsfläche angebracht sein. Durch eine geschickt gewählte Anordnung des Abschirmelements kann somit auch der erzeugte Schatten minimiert werden, insbesondere, wenn das Abschirmelement senkrecht oder nahezu senkrecht zur Projektionsfläche steht.

Wie bereits oben erwähnt, kann der Schattenwurf des Abschirmelementes auch durch seine Dicke bestimmt werden. Besonders zu bevorzugen ist eine Ausführungsvariante der Erfindung, bei der die Dicke des Abschirmelementes ein Viertel des Laserstrahldurchmessers nicht überschreitet.

Je nach gewünschter Funktionsweise des Laserprojektionssystems können verschiedenste optische Funktionselemente hierin integriert werden. Beispielsweise kann bei modernen Laserprojektionssystemen wenigstens eines der optischen Funktionselemente als Mikrospiegelanzeige mit Mikrospiegeln ausgebildet sein. Derartige Mikrospiegelanzeigen können selbst als anzeigendes Funktionselement dienen, besitzen zusätzlich allerdings auch eine Anordnung sehr vieler Mikrospiegel. Diese sind in der Regel entlang einer Fläche angeordnet. Die einzelnen Spiegel jedoch können in ihrer Ausrichtung variiert werden. Das Verkippen der einzelnen Mikrospiegel erfolgt meist zwischen diskreten Positionen, wobei die möglichen Umschaltfrequenzen zum Umschalten auf bestimmte Verkippungspositionen der Mikrospiegel sehr hoch sein können und das Verkippen daher schnell erfolgen kann. Es können dabei Frequenzen erreicht werden, welche weitaus oberhalb der videofähigen Bildwiederholfrequenz liegen.

Gerade bei der Verwendung einer Mikrospiegelanzeige kann es durchaus von Vorteil sein, das Fenster und/oder das Abschirmelement in möglichst großer Nähe zu den Mikrospiegeln oder auch einem anderen optischen Funktionselement anzuordnen. Durch ihre Einfachheit können die Erfindung bzw. Ausführungsbeispiele und Weiterbildungen der Erfindung in der Regel kostengünstig gestaltet werden. Die Erfindung bzw. eine Ausführungsform der Erfindung kann z.B. während des Fertigungsprozesses eines Mikrospiegels direkt am Wafer-Level eingesetzt werden. Es können daher auch Zeitaufwand eingespart und Herstellungskosten gesenkt werden.

Eine Ausführungsform der Erfindung sieht des Weiteren vor, das transparente Fenster zugleich mit einem Abschirmelement auszustatten bzw. das Abschirmelement auf dem transparenten Fenster anzubringen.

Denkbar ist bei einer Ausführung der Erfindung ebenso, das Abschirmelement senkrecht zur Fläche, auf der die Mikrospiegelanzeige angeordnet ist, anzuordnen. Auch hierdurch kann beispielsweise der Schattenwurf reduziert werden.

Um grundsätzlich die Qualität der Bilddarstellung weiter zu erhöhen, kann es vorteilhaft sein, eine Modulationseinheit zur Bildkorrektur zu verwenden. Eine derartige Modulationseinheit korrigiert das zur Abbildung verwendete Licht in der Weise, dass die Qualität der Darstellung erhöht wird und insbesondere eine möglichst einheitliche Abbildung entsteht. Beispielsweise kann eine derartige Modulationseinheit die Intensität bzw. die Intensitätsverteilung korrigieren.

Obgleich das Abschirmelement im Einzelfall sehr klein ausgebildet werden kann, besitzt es dennoch bei einer Anbringung im Strahlengang einen gewissen Schattenwurf, welcher zumindest bewirken kann, dass die Intensität der Abbildung an der entsprechenden Stelle verringert ist. Bei einer besonders bevorzugten Weiterbildung ist daher die Modulationseinheit zur Korrektur des Schattenwurfs des Abschirmelements im Strahlengang des Laserstrahls ausgebildet. Besonders zu bevorzugen ist an dieser Methode, dass in der Regel die Bildqualität nicht vermindert wird und auch das abzubildende Motiv in der Regel bis auf eine Intensitätskorrektur unverändert bleibt.

Daher ist bei einer besonders vorteilhaften Ausführungsform der Erfindung die Modulationseinheit zur Bildkorrektur mittels einer Verstärkung der Intensität gemäß einer invertierten gaußförmigen Verteilung entlang wenigstens einer Linie des Intensitätsprofils ausgebildet. Dies ist besonders dadurch bedingt, dass zumindest bei einfachen geometrischen Formen, welche das Abschirmelement annimmt, die Intensitätsverteilung des Schattenwurfs des Abschirmelements einer gaußförmigen Verteilung entspricht. Wird demnach zur Anpassung der Intensität ein entsprechend angepasstes gaußförmiges Profil als Grundlage vorgegeben, so kann zumindest Näherungsweise das Bild so korrigiert werden, dass für den Benutzer praktisch kein Unterschied zwischen einem korrigierten Bild und einer solchen Abbildung zu verzeichnen ist, welche gar nicht erst durch einen Schattenwurf beeinträchtigt wurde.

Prinzipiell kann es von Vorteil sein, wenigstens eines der transparenten Fenster zu entspiegeln, insbesondere mittels wenigstens einer Antireflexbeschichtung. Derartige Beschichtungen stellen in der optischen Technik eine gängige Methode dar, um den Reflexionsgrad eines Fensters bzw. einer Oberfläche möglichst gering zu halten.

Auch der generelle Einsatz derartiger Projektionssysteme kann sehr verschieden sein. Vorteilhaft ist es beispielsweise, ein derartiges Laserprojektionssystem als Head-Up-Display (HUD) auszubilden. Hierdurch wird ermöglicht, ein modernes Projektionssystem ebenfalls in Fahrzeugen wie beispielsweise in Kraftfahrzeugen oder auch Luftfahrzeugen wie Flugzeugen oder Hubschraubern nutzbar zu machen. Gerade bei derartigen Head-Up-Displays wird in der Industrie versucht, die Technik möglichst weit voranzutreiben, da man sich davon verspricht, dem Fahrer möglichst benutzergerecht Informationen, die sowohl den Fahrkomfort als auch die Fahrsicherheit betreffen, auf elegante Art und Weise zur Verfügung zu stellen.

### Ausführungsbeispiel

Ein Ausführungsbeispiel der Erfindung ist in der Zeichnung dargestellt und wird anhand der Figuren auch unter Angabe weiterer Vorteile näher beschrieben und erläutert. Im Einzelnen zeigen:
- Figur 1: eine schematische Darstellung eines optischen Funktionselementes in einem Laserprojektionssystem mit Fenster und Abschirmelement,
- Figur 2: eine schematische Darstellung einer Abbildung, auf welche, ohne Verwendung eines Abschirmelementes, eine Reflexion am Fenster auftrifft sowie
- Figur 3: eine schematische Darstellung einer Abbildung mit einem Schattenwurf ohne bildkorrigierende Modulationseinheit.

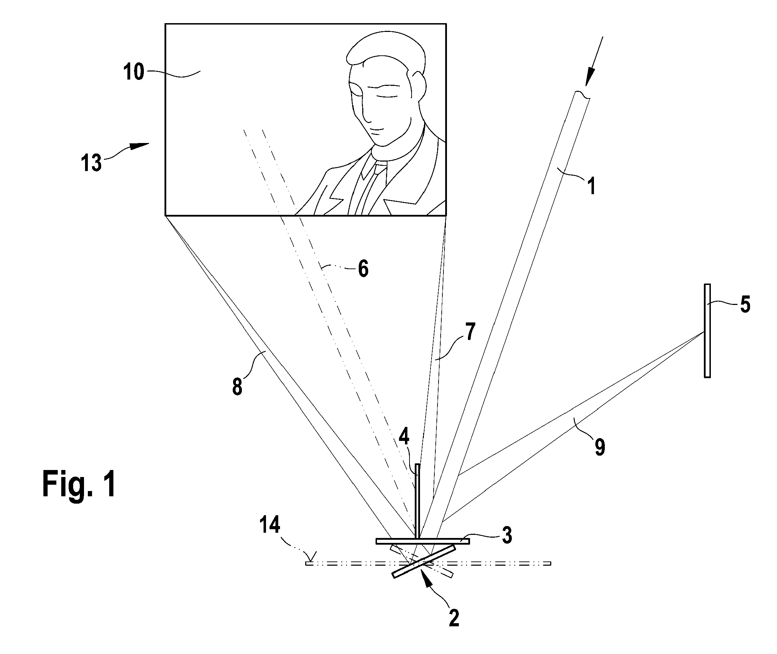

Figur 1 zeigt wenigstens einen Teil eines Laserprojektionssystems mit einem optischen Funktionselement, hier einem Mikrospiegel 2, wobei die Darstellung als Kreuz zwei Verkipppositionen des Mikrospiegels 2 andeuten. Für eine Mikrospiegelanzeige werden in der Regel sehr viele Mikrospiegel auf einer Fläche 14 angeordnet. Unmittelbar über dem Mikrospiegel 2 befindet sich ein entsprechendes transparentes Fenster 3. Auf diesem Mikrospiegel 2 und gleichzeitig das Fenster 3 fällt ein abzubildender Laserstrahl 1 ein. Der einfallende Strahl 1 wird durch den Mikrospiegel 2 abgelenkt, sodass entsprechende abbildende Strahlen 7, 8 auf einer Projektionsfläche 13 eine Abbildung 10 bewirken. Zusätzlich ist senkrecht auf dem Fenster 3 ein Abschirmelement 4 angebracht. Ohne das Abschirmelement 4 würde ein Bruchteil des einfallenden Lichtes 1 am Fenster 3 reflektiert und zu einem Störreflex 6 werden, welcher schließlich auch auf der Abbildung 10 zu sehen wäre. Durch Verwendung eines Abschirmelementes 4 wird dieses Licht jedoch reflektiert und als Strahl 9 aus dem Abbildungsstrahlengang herausgelenkt. Dieses Licht wird vollständig von einem Absorber 5 absorbiert und ist somit für einen Benutzter nicht mehr sichtbar.

Grundsätzlich würde durch das Abschirmelement 4 auf dem Bild 10 ein Schattenwurf 12 erzeugt. Vorteilhafterweise wird dieser Schattenwurf 12 durch eine hier nicht dargestellte Modulationseinheit automatisch korrigiert. Zum Beispiel kann durch eine derartige Modulationseinheit das einfallende Licht 1 bereits in seiner Intensitätsverteilung so angepasst werden, dass dieser Schattenwurf 12 letzten Endes herauskorrigiert erscheint.

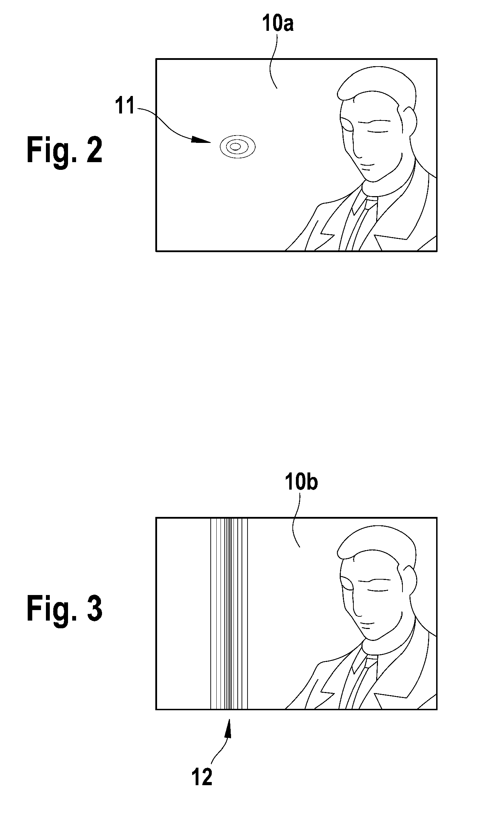

Daneben zeigt Figur 2 eine Abbildung 10a, bei der das am Fenster reflektierte Licht nicht durch ein Abschirmelement 4 abgeschirmt worden ist. Dieses Licht erzeugt auf dem Bild 10a einen Lichtfleck 11, dessen Intensität vom Zentrum nach außen hin abnimmt. Dieses Intensitätsprofil ist in Figur 2 nur schematisch durch die Darstellung konzentrisch angeordneter Ringe dargestellt. Die Intensität ist dabei am höchsten im Zentrum des Lichtflecks 11.

Figur 3 zeigt während dessen eine Abbildung 10b, bei der exemplarisch ein Schattenwurf 12 dargestellt ist, welcher dadurch entsteht, dass ein Abschirmelement 4 einen Teil des abzubildenden Lichtes selbst abschirmt und diese Abschirmung nicht durch beispielsweise einer Modulationseinheit herauskorrigiert wurde. Auch dieser Schattenwurf 12 zeigt in der Regel ein gaußförmiges bzw. invertiert gaußförmiges Profil (je nach Betrachtungsweise). Dieses Profil ist in Figur 3 dadurch angedeutet, dass der Schatten 12 im Zentrum am dunkelsten ist (dunkler, breiterer Streifen) und diese Abnahme der Intensität zu den Seitenrändern hin geringer wird, welches durch die Anordnung paralleler Linien im Schattenwurf 12 angedeutet ist. Auch ein solches zum Beispiel gaußförmiges Profil könnte durch eine Modulationseinheit, welche eine entsprechend angepasste gegenüber dem Profil invertierte gaußförmige Intensitätsverstärkung durchführt, korrigiert bzw. zumindest verbessert werden. In diesem Fall ist das Abschirmelement 4 so angeordnet, dass es über die gesamte Höhe der Abbildung 10b gleichmäßig einen Schattenwurf 12 erzeugt.

Allen Ausführungsbeispielen und Weiterbildung der Erfindung ist gemeinsam, dass ein Abschirmelement zur Unterdrückung von Reflexionen am transparenten Fenster vorgesehen ist, das in einem Strahlengang der Reflexion am transparenten Fenster liegt.

## Patentansprüche

1. Laserprojektionssystem zur Modulierung und/oder Abbildung von Laserstrahlen, umfassend wenigstens ein optisches Funktionselement (2), wenigstens ein für die Laserstrahlen (1, 7, 8, 9) zumindest teilweise transparentes Fenster (3), welches sich im Strahlengang des Laserstrahls befindet, **dadurch gekennzeichnet, dass** ein Abschirmelement (4) zur Unterdrückung von Reflexionen (6, 11) am transparenten Fenster (3) vorgesehen ist, das in einem Strahlengang der Reflexion (6, 11) am transparenten Fenster (3) liegt.

2. Laserprojektionssystem nach Anspruch 1, **dadurch gekennzeichnet, dass** das Abschirmelement (4) hoch reflektierend ausgebildet ist.

3. Laserprojektionssystem nach einem der vorgenannten Ansprüche, **dadurch gekennzeichnet, dass** das Abschirmelement (4) als Blende und/oder Absorptionselement ausgebildet ist.

4. Laserprojektionssystem nach einem der vorgenannten Ansprüche, **dadurch gekennzeichnet, dass** ein Absorptionselement (5) zur Absorption der vom Abschirmelement (4) reflektierten Laserstrahlung (9) vorhanden ist.

5. Laserprojektionssystem nach einem der vorgenannten Ansprüche, **dadurch gekennzeichnet, dass** das Abschirmelement (4) als ebene Scheibe ausgebildet ist.

6. Laserprojektionssystem nach einem der vorgenannten Ansprüche, **dadurch gekennzeichnet, dass** das Abschirmelement (4) senkrecht zum transparenten Fenster angeordnet ist.

7. Laserprojektionssystem nach einem der vorgenannten Ansprüche, **dadurch gekennzeichnet, dass** eine Projektionsfläche (13) zur Abbildung (10, 10a, 10b) der modulierten und/oder abzubildenden Laserstrahlen (7, 8) vorgesehen ist.

8. Laserprojektionssystem nach einem der vorgenannten Ansprüche, **dadurch gekennzeichnet, dass** das Abschirmelement (4) senkrecht zur Projektionsfläche (13) angeordnet ist.

9. Laserprojektionssystem nach einem der vorgenannten Ansprüche, **dadurch gekennzeichnet, dass** die Dicke des Abschirmelementes (4) ein Viertel des Laserstrahldurchmessers nicht überschreitet.

10. Laserprojektionssystem nach einem der vorgenannten Ansprüche, **dadurch gekennzeichnet, dass** eines der optischen Funktionselemente (2) als Mikrospiegelanzeige mit Mikrospiegeln (2) ausgebildet ist.

11. Laserprojektionssystem nach einem der vorgenannten Ansprüche, **dadurch gekennzeichnet, dass** das transparente Fenster (3) mit dem Abschirmelement (4) versehen ist.

12. Laserprojektionssystem nach einem der vorgenannten Ansprüche, **dadurch gekennzeichnet, dass** das Abschirmelement (4) senkrecht zur Fläche (14) angeordnet ist, auf die Mikrospiegel (2) der Mikrospiegelanzeige angeordnet sind.

13. Laserprojektionssystem nach einem der vorgenannten Ansprüche, **dadurch gekennzeichnet, dass** eine Modulationseinheit zur Bildkorrektur vorhanden ist.

14. Laserprojektionssystem nach einem der vorgenannten Ansprüche, **dadurch gekennzeichnet, dass** die Modulationseinheit zur Korrektur des Schattenwurfs (12) des Abschirmelementes im Strahlengang des Laserstrahls ausgebildet ist.

15. Laserprojektionssystem nach einem der vorgenannten Ansprüche, **dadurch gekennzeichnet, dass** die Modulationseinheit zur Bildkorrektur mittels einer Verstärkung der Intensität gemäß einer invertierten gaußförmigen Verteilung entlang wenigstens einer Linie des Intensitätsprofils ausgebildet ist.

16. Laserprojektionssystem nach einem der vorgenannten Ansprüche, **dadurch gekennzeichnet, dass** wenigstens eines der Fenster (3) entspiegelt, insbesondere mittels wenigstens einer Antireflex-Beschichtung, ausgebildet ist.

17. Laserprojektionssystem nach einem der vorgenannten Ansprüche, **dadurch gekennzeichnet**, das Laserprojektionssystem als Head-up-Display (HUD) ausgebildet ist.
